# EUROPEAN PATENT SPECIFICATION

(11) **EP 0 349 924 B1**
(45) Date of publication and mention of the grant of the patent: **09.06.1993**
(21) Application number: 89111972.9
(22) Date of filing: 30.06.1989
(51) Int. Cl.: H02P 7/638, H02P 5/418, H02P 7/00

(54) **A control means for a universal electric motor**
Steuermittel für einen elektrischen Universalmotor
Moyens de contrôle pour un moteur électrique à fonction universelle

(30) Priority: 07.07.1988 IT 4574388
(43) Date of publication of application: 10.01.1990
(73) Proprietor: PROCOND ELETTRONICA S.p.A., 33170 Pordenone (IT)
(72) Inventor: Ardit, Giuseppe, I-30123 Venezia (IT); Cigana, Fiorenzo, I-30027 San Donà di Piave (Venezia) (IT); Magris, Renzo, I-33170 Pordenone (IT)
(74) Representative: Kirschner, Klaus Dieter, Dipl.-Phys.

(56) References cited:
- EP-A- 0 162 423
- ELEKTROTECHNIK vol. 70, no. 8, 04 May 1988, WURZBURG DE pages 48 - 51; "Von der Batterie gespeist"

## Description

The present invention relates to a control means for a universal electric motor.

As is known, a universal motor is a commutator motor with series excitation whose rotating speed can be regulated, for example, by modulating the supply voltage of the motor by means of a control circuit of the phase splitting type, the pulse-width modulation type, or the like.

Normally, the rotor of the universal motor is associated with a speed transducer (e.g. a tachometric generator) adapted to drive the control circuit with a signal proportional to the effective rotating speed of the motor; the control circuit compares this signal with a corresponding reference signal and controls the power supply of the motor proportionally to the error signal resulting from the comparison in order to keep the desired operative speed substantially constant.

Universal motors and such control means are commonly used, for example, to rotate the drums of washing machines, wherein the drum must be rotated alternatingly in opposite directions during fixed operative phases.

For this purpose, the control means also comprises a means for inverting the motor rotation, that substantially consists of a commutator with two contacts which are controlled (e.g. by a control means associated with the programmer of the washing machine) to commutate simultaneously between a first and a second position. Such contacts are connected to the heads of the exciting (or rotor) winding of the motor in such a way that in the aforesaid first and second positions the exciting winding is always connected in series to the rotor windings and the power supply, but with a respectively opposite winding direction of the coils. Consequently, the motor rotates in one direction or the other depending on whether the contacts of the change-over switch are in the first or in the second position (see EP-A-0 162 423).

Since the speed control circuit (or at least its power part) is substantially connected in series to the motor and to the power supply, it follows that the total supply voltage is applied to the motor in the case of a short-circuit of the control circuit power part.

This can also occur if the speed transducer fails, which for example may erroneously signal a motor standstill or a motor state at a speed lower than the actual one.

In both cases, the motor tends to rotate at an extremely high speed, thereby damaging the apparatus in which it is mounted; such a phenomenon is particularly serious in cases in which the means for inverting the direction of rotation of the motor is simultaneously driven.

To remedy this shortcoming it has been proposed to connect in series to the motor an electric safety switch that is normally on and adapted to open to deenergize the motor if the total supply voltage is applied to the latter.

The safety switch can be a centrifugal switch adapted to open when the motor exceeds a predetermined rotating speed. In such a case, however, the switch is relatively complex and unreliable, and also functions rather imprecisely.

Alternatively, the safety switch can be driven by a relay, or the like, adapted to be excited to open the switch when the signal generated by the speed transducer of the motor exceeds a predetermined value. In particular, this signal drives a comparator, or the like, adapted to excite the relay when the signal has a value higher than that of a reference signal. This solution is therefore undesirably complex. Furthermore, to guarantee sufficient operational safety, the relay must be associated with a selfholding electric circuit, which further complicates the control means and undesirably absorbs electrical energy when the relay is excited.

A simpler solution has also been proposed, consisting in connecting in series to the motor a fuse suitably calibrated to break the power supply circuit when the current exceeds a predetermined safety value. However, this solution is also unsatisfactory, since the fuse readily deteriorates in the course of time, even in states of correct functioning, and thus tends to cut off incorrectly the current supplied to the motor.

The object of the present invention is to provide a control means for universal electrical motors that is particularly simple and reliable and in a position to provide optimal safety states in case of a short-circuit in the driving circuit of the motor and/or corresponding failure of the speed transducer.

According to the invention, this object is achieved in a control means for a universal electric motor with an exciting winding and a rotor winding, comprising the series of a means inverting the direction of rotation of the motor and a speed control circuit.

The latter is adapted to modulate the voltage of a power supply in accordance with the value of a signal applied to a driving input of the speed control circuit, said signal being generated by a speed transducer providing a value proportional to the rotating speed of the motor. The control means is characterized in that the inverting means comprises first and second separately controllable commutator means each adapted to commutate between a normal off position and a working position, the terminals of one of the windings being connected to a first and to a second phase, respectively, or vice versa, of the power supply when one of the commutator means is in the working position, the connection of the power supply to the motor being broken when both commutator means are in the normal off position. A control unit drives the commutator means alternatingly to commutate one of them from the normal off position to the working position only when it receives a release signal from detector means. The latter generate the release signal only when they detect a state of normal function in the control means of the motor.

The features and advantages of the invention will become clearer from the following description, serving only as a nonrestrictive example, with reference to the adjoined drawings in which
Fig. 1 shows schematically a preferred embodiment of the inventive control means, with the motor switched off;
Figs. 2 and 3 show only the power section of the control means of Fig. 1, in different operating states;
Fig. 4 shows only the power section of a variation of the inventive control means, with the motor switched off.

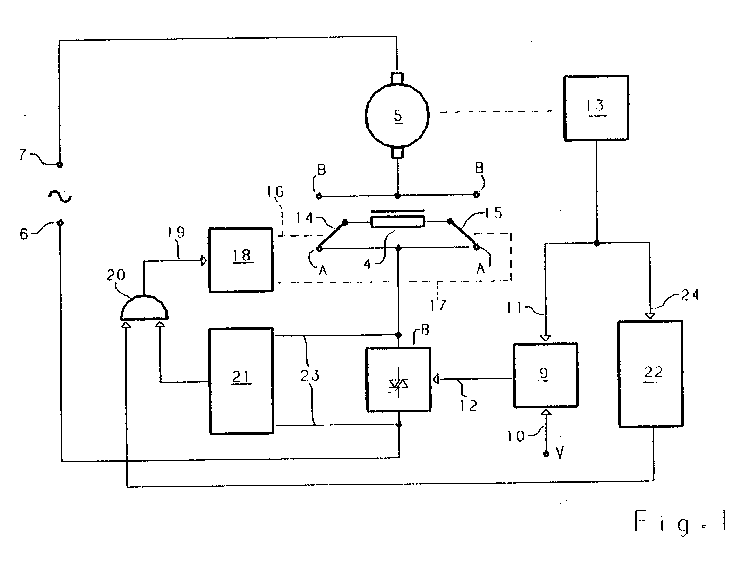

Referring to Fig. 1, the universal motor under control comprises an exciting winding or stator 4 and a rotor winding 5.

For example, rotor 5 is adapted to rotate the drum of a washing machine, omitted from the drawing for the sake of simplicity.

Motor 4, 5 is connected to heads or phases 6, 7 of an (e.g. sinusoidal) power supply via the series of a means for inverting the direction of rotation of the motor and a circuit 8, 9 for controlling the motor speed. In particular, the motor is connected in series to power stage 8 of the control circuit, whose driving stage 9 is equipped with a reference input 10 and an input 11 to which a driving signal generated by a speed transducer 13 is applied.

The latter is, for example, a tachometric generator driven by rotor 5 and the driving signal generated thereby obviously has a value proportional to the rotating speed of the motor.

Via its output 12, stage 9 of the control circuit drives power stage 8 to modulate the voltage of power supply 6, 7 in accordance with the value of the driving signal generated by transducer 13, in order to maintain a constant rotating speed of motor 4, 5 determined by the value of a signal V applied to reference input 10 of stage 9.

For example, power stage 8 comprises at least one controlled switch and constitutes with stage 9 a control circuit of the phase splitting type.

The inverting means comprises a first and a second separate commutator 14, 15 each having a moving contact connected to an associated terminal of exciting winding 4 and adapted to close on a fixed contact A or on a fixed contact B. When commutators 14, 15 are in the normal off position shown in Fig. 1, their moving contacts are closed on (interconnected) contacts A, thereby connecting both terminals of stator 4 to phase 6 of the power supply via stage 8.

However, when commutators 14, 15 are in the working position in which the moving contacts are closed on (interconnected) contacts B, both terminals of stator 4 are connected to phase 7 of the power supply via rotor 5.

Commutators 14, 15 are adapted to be driven separately by respective outputs (indicated as 16, 17 in Fig. 1 and comprising e.g. respective relays) of a time-lag control unit 18 known per se and associated, for example, with the programmer of the washing machine.

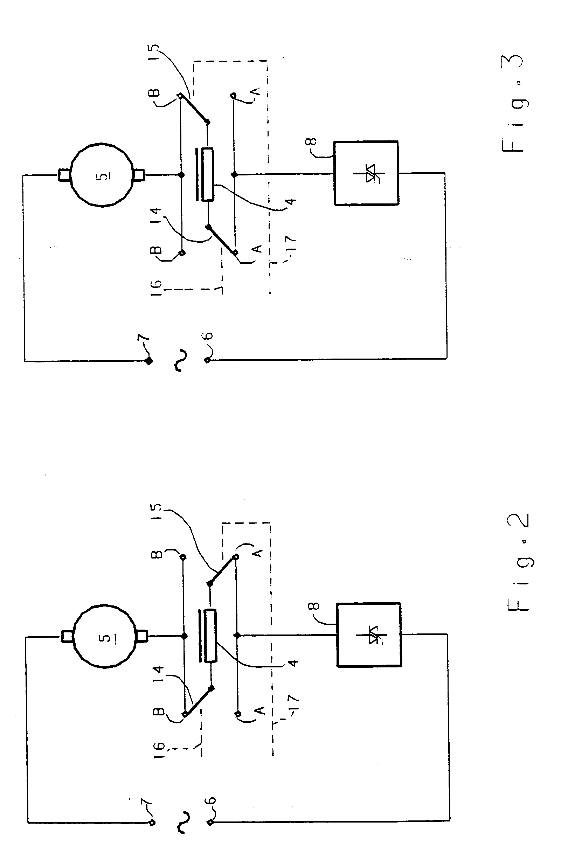

According to one aspect of the invention, control unit 18 is adapted to drive commutators 14, 15 alternatingly (in fixed operative phases of the washing machine) to commutate temporarily from off position A to working position B. Therefore, when commutator 14 is temporarily closed on contact B (Fig. 2), exciting winding 4 is connected in series to power supply 6, 7 and to rotor 5 in such a way as to effect the rotation of the motor in a predetermined direction, for example in the clockwise direction.

However, when commutator 15 is temporarily closed on contact B (Fig. 3), exciting winding 4 is connected in series to the power supply and to rotor 5 in an opposite direction, so as to effect the rotation of the motor in the opposite direction, namely counterclockwise. Ultimately, the function of motor 4, 5 under control is entirely conventional.

Moreover, according to another aspect of the invention, control unit 18 is adapted to drive commutators 14, 15 as described above only when it receives at its input 19 a release signal, for example a logical signal having a predetermined level. For this purpose, input 19 is connected to the output of an AND gate 20 whose inputs are in turn driven by the output of respective detector stages 21, 22.

Stages 21, 22 are substantially identical and comprise respective integration voltage detector circuits, i.e. circuits known per se that are adapted to produce at the output normally a logical signal having a predetermined level unless the voltage applied to the own input falls below a threshold value at least for a given time period T.

The voltage at the heads of splitter stage 8 is applied to the input (schematically indicated as 23 in Fig. 1) of detector 21, while input 24 of detector 22 is driven by the output of speed transducer 13.

Obviously, the various circuits forming the control means of Fig. 1 are dimensioned suitably in accordance with the desired degree of operational safety. In particular, the aforesaid time period T of detector 21 is preferably greater than the period of the supply voltage at heads 6, 7 in order to avoid incorrect influencing of detector 21 during the conduction periods of splitter stage 8. Furthermore, time period T of detector 22 (which may be different from that of detector 21) is preferably greater than the time period normally used by rotor 5 to reach its operating speed, in order to avoid incorrect influencing of detector 22 during the starting phases of the motor.

Therefore, if motor 4, 5 and the total control means function regularly, detectors 21 and 22 continuously supply to input 19 of control unit 18, via gate 20, the release signal required for driving commutators 14, 15 as described above.

In the case of a short-circuit of power stage 8 of the speed control circuit, however, the voltage at input 23 of detector 21 breaks down, so that after time period T detector 21 generates at its own output a logical signal with a value of zero, for example.

Analogously, in the case of a failure of speed transducer 13 (for example a cutoff of the windings of the tachometric generator), or if a substantially blocked state of rotor 5 occurs, the signal at the output of transducer 13 falls below the threshold value of detector 22. Therefore, after time period T detector 22 generates at its own output a logical signal with a value of zero, for example.

In both cases, input 19 of control unit 18 no longer receives the release signal from gate 20, so that unit 18 becomes inoperative and both commutators 14, 15 remain in the off position shown in Fig. 1, cutting off the current supplied to universal motor 4, 5.

According to the invention, therefore, commutators 14 and 15 perform the double function of inverting the direction of rotation of the motor and of a safety means adapted to prevent the motor from being undesirably supercharged in the case of failure. This is chiefly obtained by the fact that, in contrast to the prior art solutions, stator 4 is not always connected in series to rotor 5 via one of two commutators 14, 15.

On the contrary, the supply circuit of the motor is automatically broken when at least one of stages 21, 22 stops detecting a state of normal function of the control means.

The latter is evidently simple and reliable, as is the object of the invention.

Obviously, the described control means can be modified in numerous ways falling within the scope of the invention.

For example, in the off position commutators 14, 15 can be closed on contacts B instead of on contacts A, or be connected to respective terminals of rotor winding 5 instead of to those of stator 4. Furthermore, speed control circuit 8, 9 can be of various types, for example of the pulse-width modulation (PWM) type.

It is of course obvious to an expert in the field that speed transducer 13 can also be different, as well as the logic circuit by which detectors 21, 22 detect the operating states of the control means and consequently drive control unit 18.

It is also evident to an expert in the field that the commutator means for controlling the drive of motor 4, 5 as described can be different and/or disposed differently.

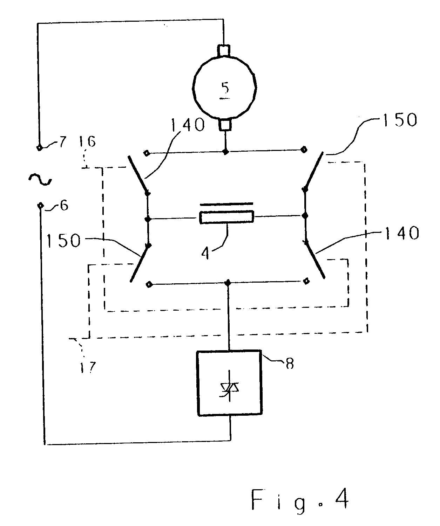

For example, according to the variation in Fig. 4 commutators 14, 15 can be replaced by respective pairs of controlled switches 140 and 150, of the electromechanical or electronic type. Each pair of switches 140 and 150, normally open as in Fig. 4, is driven simultaneously by a respective output 16, 17 of time-lag control unit 18 and is connected so as to form opposite sides of a bridge circuit one diagonal of which consists of winding 4 (or winding 5) of the motor. The other diagonal of the bridge circuit is instead connected to power supply 6, 7 via winding 5 (or winding 4) and power stage 8. Analogously as described above, control unit 18 is adapted to drive the pairs of switches 140, 150 alternatingly to go temporarily into the closed working position, in such a way as to supply winding 4 alternatingly in one direction and in the opposite direction, thereby effecting the drive of motor 4, 5 in corresponding opposite directions of rotation.

According to the invention, switches 140 and 150 are automatically cut off, switching off the motor, when an abnormal operating state of the control means of the motor and/or of the motor itself is detected, as described above.

In any case, detector means equivalent to 21, 22 can be provided to control the correct functioning of any other component associated with the inventive means.

## Claims

1. A control means for a universal electric motor with an exciting winding (4) and a rotor winding (5), comprising the series of a means (14, 15; 140, 150) for inverting the direction of rotation of the motor and a speed control circuit (8, 9) adapted to modulate the voltage of a power supply in accordance with the value of a signal applied to a driving input of the speed control circuit, said signal being generated by a speed transducer (13) providing a value proportional to the rotating speed of the motor, **characterized** in that the inverting means comprises first and second separately controllable commutator means (14, 15; 140, 150) each adapted to commutate between a normal off position and a working position, the terminals of one of the windings (4) being connected to a first and a second phase (6, 7), respectively, or vice versa, of the power supply when one of the commutator means is in the working position, the connection of the power supply to the motor being broken when both commutator means are in the normal off position, a control unit (18) driving the commutator means (14, 15; 140, 150) alternatingly to commutate one of them from the normal off position to the working position only when it receives a release signal from detector means (21, 22) which generate the release signal only when they detect a state of normal function of the control means of the motor (4, 5).

2. The control means of claim 1, **characterized** in that the commutator means comprise a first and a second commutator (14, 15) each adapted to connect a respective terminal of the winding (4) to a first phase (6) of the power supply when it is in the normal off position (A) and to a second phase (7) of the power supply when it is in the working position (B).

3. The control means of claim 1, **characterized** in that the commutator means comprise a first and second pair of controlled switches (140, 150), each of which is open in the normal off position and closed in the working position, each pair of switches (140, 150) forming opposite sides of a bridge one diagonal of which is connected to the power supply (6, 7) and the opposite diagonal of which comprises the winding (4).

4. The control means of claim 1, whose control circuit comprises a power stage (8) connected in series to the motor and a driving stage (9), **characterized** in that the detector means comprise a voltage detector (21) normally generating the release signal, except when the voltage at the terminals of the power stage (8), which is applied to an input (23) of the voltage detector (21), falls below a predetermined threshold value at least for a given time period (T).

5. The control means of claim 1, **characterized** in that the detector means comprise a voltage detector (22) normally generating the release signal, except when the signal generated by the speed transducer (13), which is applied to an input (24) of the voltage detector (22), falls below a predetermined threshold value at least for a given time period (T).

6. The control means of claims 4 and 5, **characterized** in that the release signals from the voltage detectors (21, 22) are provided to corresponding inputs of an AND gate (20) whose output in turn provides the release signal to the control unit (18).

## Patentansprüche

1. Steuereinrichtung für einen elektronischen Universalmotor mit einer Erregerwicklung (4) und einer Läuferwicklung (5), der die Reihe einer Einrichtung (14,15;140,150) zur Umkehrung der Drehrichtung des Motors und eines Drehzahl-Steuerstromkreises (8,9) umfaßt, der geeignet ist, die Spannung einer Stromzuführung in Übereinstimmung mit dem Wert eines auf einen Treiber-Eingang des Drehzahl-Steuerstromkreises angelegten Signals zu modulieren, wobei das Signal von einem Drehzahlwandler (13) erzeugt wird, der einen zu der Drehzahl des Motors proportionalen Wert liefert,
**dadurch gekennzeichnet, daß** die Umkehreinrichtung eine erste und eine zweite Kommutator-Einrichtung (14,15; 140,150) umfaßt, die getrennt steuerbar sind und von denen jede geeignet ist, zwischen einer Ruheposition und einer Arbeitsposition umzuschalten, wobei die Anschlußklemmen einer der Wicklungen (4) mit einer ersten und einer zweiten Phase (6,7) der Stromzuführung verbunden sind, in dieser Reihenfolge oder umgekehrt, wenn eine der Kommutator-Einrichtungen in der Arbeitsposition ist, während die Verbindung der Stromzuführung mit dem Motor unterbrochen wird, wenn beide Kommutator-Einrichtungen in der Ruheposition sind, wobei eine Steuereinheit (18) die Kommutator-Einrichtung (14,15;140,150) wechselnd dazu antreibt, eine der beiden von der Ruheposition in die Arbeitsposition umzuschalten, und zwar nur dann, wenn sie ein Freigabesignal von einer Detektoreinrichtung (21,22) erhält, die das Freigabesignal nur erzeugt, wenn sie einen Zustand normalen Betriebs der Steuereinrichtung des Motors (4,5) ermittelt.

2. Steuereinrichtung nach Anspruch 1, **dadurch gekennzeichnet, daß** die Kommutator-Einrichtung einen ersten und einen zweiten Kommutator (14,15) umfaßt, von denen jeder geeignet ist, eine jeweilige Anschlußklemme der Wicklung (4) mit einer ersten Phase (6) der Stromzuführung zu verbinden, wenn sie in der Ruheposition (A) ist und mit einer zweiten Phase (7) der Stromzuführung, wenn sie in der Arbeitsposition (B) ist.

3. Steuereinrichtung nach Anspruch 1, **dadurch gekennzeichnet, daß** die Umschalteinrichtung ein erstes und ein zweites Paar gesteuerte Schalter (140,150) aufweist, von denen jeder in der Ruheposition offen und in der Arbeitsposition geschlossen ist, wobei jedes Paar Schalter (140,150) gegenüberliegende Seiten einer Brücke bildet, deren eine Diagonale mit der Stromzuführung (6,7) verbunden ist und deren gegenüberliegende Diagonale die Wicklung (4) aufweist.

4. Steuereinrichtung nach Anspruch 1, dessen Steuerstromkreis eine Leistungsstufe (8), die in Serie mit dem Motor geschaltet ist, und eine Treibstufe (9) umfaßt, **dadurch gekennzeichnet, daß** die Detektoreinrichtung einen Spannungsdetektor (21) aufweist, der normalerweise das Freigabesignal erzeugt, außer wenn die Spannung an den Anschlußklemmen der Leistungsstufe (8), die an einen Eingang (23) des Spannungsdetektors (21) angelegt wird, zumindest für eine vorgegebene Zeitdauer (T) unter einen vorbestimmten Schwellenwert fällt.

5. Steuereinrichtung nach Anspruch 1, **dadurch gekennzeichnet, daß** die Detektoreinrichtung einen Spannungsdetektor (22) aufweist, der normalerweise das Freigabesignal erzeugt, außer wenn das von dem Drehzahlwandler (13) erzeugte Signal, das an einen Eingang (24) des Spannungsdetektors (22) angelegt wird, zumindest für eine vorgegebene Zeitdauer (T) unter einen vorbestimmten Schwellenwert fällt.

6. Steuereinrichtung nach den den Ansprüchen 4 und 5, **dadurch gekennzeichnet, daß** die Freigabesignale von den Spannungsdetektoren (21,22) entsprechenden Eingängen einer UND-Schaltung (20) geliefert werden, deren Ausgang wiederum das Freigabesignal an die Steuereinheit (18) liefert.

## Revendications

1. Moyen de commande pour un moteur électrique universel avec un enroulement d'excitation (4) et un enroulement de rotor (5), comprenant en série un moyen (14, 15 ; 140, 150) pour inverser le sens de rotation du moteur et un circuit de commande de vitesse (8, 9) conçu pour moduler la tension d'une alimentation en courant en fonction de la valeur d'un signal appliqué à une entrée de pilotage du circuit de commande de vitesse, ledit signal étant produit par un transducteur de vitesse (13) fournissant une valeur proportionnelle à la vitesse de rotation du moteur, caractérisé en ce que le moyen d'inversion comprend des premier et second moyens commutateurs pouvant être commandés séparément (14, 15 ; 140, 150), chacun conçu pour basculer entre une position de repos, normale, et une position de travail, les bornes de l'un des enroulements (4) étant connectées, respectivement, à une première et à une seconde phases (6, 7), ou vice versa, de l'alimentation en courant lorsque l'un des moyens commutateurs est dans la position de travail, la connexion de l'alimentation en courant au moteur étant rompue lorsque les deux moyens commutateurs sont dans la position de repos, normale,, une unité de commande (18) pilotant de manière alternée les moyens commutateurs (14, 15 ; 140, 150) pour basculer l'un d'eux de la position de repos, normale, à la position de travail seulement si elle reçoit un signal de déclenchement issu de moyens détecteurs (21, 22) qui produisent le signal de déclenchement seulement lorsqu'ils détectent un état de fonctionnement normal du moyen de commande du moteur (4, 5).

2. Moyen de commande selon la revendication 1, caractérisé en ce que les moyens commutateurs comprennent un premier et un second commutateurs (14, 15) chacun conçu pour connecter une borne respective de l'enroulement (4) à une première phase (6) de l'alimentation en courant lorsqu'il est dans la position de repos, normale, (A), et à une seconde phase (7) de l'alimentation en courant lorsqu'il est dans la position de travail (B).

3. Moyen de commande selon la revendication 1, caractérisé en ce que les moyens commutateurs comprennent une première et une seconde paire d'interrupteurs commandés (140, 150), dont chacun est ouvert dans la position de repos, normale, et fermé dans la position de travail, chaque paire de contacteurs (140, 150) formant les côtés opposés d'un pont dont une diagonale est connectée à l'alimentation en courant (6, 7) et dont la diagonale opposée comprend l'enroulement (4).

4. Moyen de commande selon la revendication 1, dont le circuit de commande comprend un étage de puissance (8) connecté en série au moteur et un étage de pilotage (9), caractérisé en ce que les moyens détecteurs comprennent un détecteur de tension (21) produisant normalement le signal de déclenchement, excepté lorsque la tension aux bornes de l'étage de puissance (8), qui est appliquée à une entrée (23) du détecteur de tension (21) tombe au-dessous d'une valeur de seuil prédéterminée au-moins pendant une période de temps donnée (T).

5. Moyen de commande selon la revendication 1, caractérisé en ce que les moyens détecteurs comprennent un détecteur de tension (22) produisant normalement le signal de déclenchement, excepté lorsque le signal produit par le transducteur de vitesse (13), qui est appliqué à une entrée (24) du détecteur de tension (22), tombe au-dessous d'une valeur de seuil prédéterminée au-moins pendant une période de temps donnée (T).

6. Moyen de commande selon les revendications 4 et 5, caractérisé en ce que les signaux de déclenchement issus des détecteurs de tension (21, 22) sont fournis à des entrées correspondantes d'une porte ET (20) dont la sortie, à son tour, délivre le signal de déclenchement à l'unité de commande (18).
